(19) Europäisches Patentamt

European Patent Office

Office européen des brevets

(11) **EP 1 496 705 A2**

(12) **DEMANDE DE BREVET EUROPEEN**

(43) Date de publication:
**12.01.2005 Bulletin 2005/02**

(51) Int Cl.⁷: **H04N 7/26**

(21) Numéro de dépôt: **04291721.1**

(22) Date de dépôt: **07.07.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **11.07.2003 FR 0308519**

(71) Demandeur: **ALCATEL**
**75008 Paris (FR)**

(72) Inventeurs:
- **Falzon, Frédéric**
  **06580 Pégomas (FR)**
- **Bernard, Christophe**
  **75015 Paris (FR)**

(74) Mandataire: **Hedarchet, Stéphane**
**COMPAGNIE FINANCIERE ALCATEL**
**Département Propriété Industrielle**
**54, rue La Boétie**
**75008 Paris (FR)**

(54) **Compression contextuelle d'images numérique**

(57) Un dispositif (D) est dédié à la compression de données d'images numériques par transformée en ondelettes. Ce dispositif (D) comprend des moyens de traitement (PM) munis i) d'un module (M1) de transformation de données d'image numériques en coefficients d'ondelettes répartis dans des sous-bandes, ii) d'un module (M2) chargé d'estimer pour chaque coefficient de chaque sous-bande de l'image, de premier et second jeux de paramètres de prédiction, associés respectivement à des directions dites « nord-sud » et « ouest-est », en fonction des valeurs des coefficients d'ondelettes de ses voisins nord ou ouest, iii) d'un module (M3) de quantification des coefficients d'ondelettes, et iv) d'un module (M4) de codage entropique chargé de déterminer pour chaque coefficient de chaque sous-bande de l'image des valeurs de prédiction de l'espérance et de la largeur d'une fonction laplacienne, représentative de sa densité de probabilité, en fonction desdits premier et/ou second jeux de paramètres de prédiction et du coefficient d'ondelettes quantifié de son voisin nord ou de son voisin ouest, et de coder de façon entropique les coefficients d'ondelettes quantifiés à l'aide des espérances et largeurs associées déterminées.

FIG_1

**Description**

L'invention concerne le domaine de la compression/décompression de données d'images numériques par transformée en ondelettes.

Le codage par transformée en ondelettes consiste classiquement à coder une image en trois étapes. Une première étape est destinée à décorréler l'image en transformant ses pixels en coefficients d'ondelettes répartis dans des sous-bandes se situant à plusieurs niveaux de résolution. Une deuxième étape est destinée à quantifier les coefficients d'ondelettes obtenus lors de la première étape. Une troisième étape est destinée à effectuer un codage entropique des coefficients d'ondelettes quantifiés lors de la deuxième étape.

Comme le sait l'homme de l'art, ce type de codage ne peut être optimal qu'à condition que trois hypothèses soient vérifiées : la transformée en ondelettes doit être orthogonale, les coefficients d'ondelettes doivent être codés par un codage entropique d'ordre 0 dans lequel on n'exploite aucune dépendance statistique entre coefficients, et on doit se trouver dans les limites de la « quantification à haute résolution », dans laquelle les densités de probabilité des coefficients d'ondelettes varient peu à l'intérieur d'une boîte de quantification.

Lorsque ces hypothèses ne sont pas vérifiées, il faut en théorie faire une allocation de débit complète, en choisissant un pas de quantification a priori différent pour chaque sous-bande. Dans la pratique, le codage demeure qualitativement valable lorsque les hypothèses ne sont plus formellement vérifiées. C'est notamment le cas lorsque la transformée en ondelettes n'est pas orthogonale, mais bi-orthogonale, ou lorsque les coefficients d'ondelettes d'une même sous-bande ne sont pas codés indépendamment du fait qu'ils ne sont pas indépendants. De même, lorsque l'hypothèse de quantification à haute résolution n'est pas vérifiée, on peut modifier légèrement le codeur en remplaçant son quantificateur uniforme par un quantificateur à intervalle central (intervalle de quantification centré en zéro ou Zone Morte) de taille double. Cela résulte du fait que la distribution des coefficients d'ondelettes dans chaque sous-bande est laplacienne (ou gaussienne généralisée) avec un pic en 0 où elle ne peut plus être raisonnablement considérée comme quasi constante surtout aux débits faibles (c'est-à-dire aux forts taux de compression). Il est ici rappelé qu'une fonction laplacienne est un cas particulier d'une gaussienne généralisée.

Pour tenter d'améliorer le codage dans les conditions précitées (transformation bi-orthogonale ou transformation ne conduisant pas à l'indépendance de ses coefficients) il a été proposé de tirer partie de la dépendance entre coefficients d'ondelettes voisins dans une même sous-bande en réalisant un codage entropique contextuel prenant en compte une densité de probabilité conditionnelle en lieu et place d'une simple densité de probabilité. Cette densité conditionnelle modélise la loi d'apparition d'un coefficient d'ondelettes conditionnellement à son voisinage.

Dans ce qui suit, on entendra par « dépendance intra-bande » une dépendance entre un coefficient $C_{j,k,k'}$ (ou $W_{j,k}[n,m]$) et des coefficients voisins de même échelle ou sous-bande $W_{jk}$, comme par exemple $C_{j,k-1,k'}$ et $C_{j,k,k'-1}$ ou $C_{j,k-1,k'}$ et $C_{j,k-1,k'-1}$. De telles dépendances intra-bande sont notamment exploitées par les codeurs qui effectuent un codage des positions des coefficients significatifs en mode « run-length » ainsi que par les codeurs de type EBCOT/JPEG2000.

Par ailleurs, dans ce qui suit, on entendra par «dépendance inter-bandes » une dépendance entre un coefficient $C_{j,k,k'}$ et un coefficient placé à la même position à l'échelle supérieure, comme par exemple $C_{j+1,k/2,k'/2}$. De telles dépendances inter-bandes sont notamment exploitées par les codeurs dits « en arbre de zéros » (développés par Shapiro) et le codeur SPIHT (développé par Said et Pearlman).

Ces dépendances découlent de la représentation de chaque coefficient d'ondelettes quantifié $Q(c_{j,k,k'}{}^n)$ sous la forme d'une chaîne d'informations comportant son bit de coefficient significatif ($N_{j,k,k'}{}^n$ = 0 ou 1), et lorsque ce bit vaut un (1), son signe ($S_{j,k,k'}{}^n$ qui vaut $\pm 1$ ) et sa valeur absolue ($A_{j,k,k'}{}^n$).

Par exemple, le codage par arbre de zéros exploite la dépendance statistique entre les bits de coefficient significatif ($N_{j,k,k'}{}^n$), tandis que le codage de type EBCOT exploite la dépendance statistique entre les bits de coefficient significatif ($N_{j,k,k'}{}^n$) et la dépendance entre signes $S_{j,k,k'}{}^n$ de coefficients d'ondelettes voisins quantifiés avec différents pas.

Ces codages contextuels mettent en oeuvre des méthodes de traitement particulièrement complexes qui imposent aux codeurs d'apprendre autant d'histogrammes qu'il y a de contextes, ce qui limite notablement leur vitesse d'adaptation et interdit leur utilisation dans le cadre de la compression à haut débit d'entrée (images de grande taille) et en temps réel, notamment lors d'observations spatiales.

L'invention a donc pour but d'améliorer la situation.

Elle propose à cet effet un procédé dédié à la compression de données d'images numériques par transformée en ondelettes et comprenant une étape consistant à transformer des données d'image numériques en coefficients d'ondelettes répartis dans des sous-bandes, une étape consistant à quantifier les coefficients d'ondelettes, et une étape consistant à coder de façon entropique les coefficients d'ondelettes précédemment quantifiés.

Ce procédé se caractérise par le fait, d'une part, qu'il comprend, entre les étapes de transformation et de quantification, une étape consistant à estimer, pour chaque coefficient de chaque sous-bande d'une image, de premier et second jeux de paramètres de prédiction, associés respectivement à des directions dites « nord-sud » et « ouest-est », en fonction des valeurs des coefficients d'ondelettes de ses voisins nord ou ouest, et d'autre part, qu'à l'étape de codage entropique, d'une part, on détermine pour chaque coefficient de chaque sous-bande de l'image des valeurs de prédiction de l'espérance et de la largeur d'une fonction laplacienne (ou gaussienne généralisée), représentative de sa densité de probabilité, en fonction des premier et/ou second jeux de paramètres de prédiction et du coefficient d'ondelettes quantifié de son voisin nord ou de son voisin ouest, et d'autre part, on code de façon entropique les coefficients d'ondelettes quantifiés à l'aide des espérances et largeurs associées déterminées.

Grâce aux estimations des paramètres de prédiction, la phase de prédiction de l'étape de codage entropique est notablement simplifiée, ce qui permet de compresser (ou comprimer) des données d'image numériques à haut débit et en temps réel, notamment lors d'observations spatiales.

Le procédé selon l'invention peut comporter d'autres caractéristiques qui pourront être prises séparément ou en combinaison, et notamment :

- lorsque cela s'avère possible, on peut déterminer lors de l'étape de codage entropique, pour la fonction laplacienne de chaque coefficient d'ondelettes quantifié, des valeurs de prédiction d'espérance nord et ouest et des valeurs de prédiction de largeur nord et ouest. La valeur de prédiction d'espérance nord (ou ouest) est alors préférentiellement définie par le produit entre un premier paramètre de prédiction du premier (ou second) jeu et la valeur du coefficient d'ondelettes quantifié voisin nord (ou ouest), et la valeur de prédiction de largeur nord (ou ouest) est définie par la somme d'un deuxième paramètre de prédiction du premier (ou second) jeu et du produit d'un troisième paramètre de prédiction du premier (ou second) jeu et de la valeur absolue du coefficient d'ondelettes quantifié voisin nord (ou ouest). Dans ce cas, quatre cas doivent être envisagés selon l'environnement du coefficient d'ondelettes concerné. En l'absence de coefficient voisin nord, on identifie les valeurs de prédiction d'espérance et de largeur de la fonction laplacienne aux valeurs de prédiction d'espérance ouest et de largeur ouest. En l'absence de coefficient voisin ouest, on identifie les valeurs de prédiction d'espérance et de largeur de la fonction laplacienne aux valeurs de prédiction d'espérance nord et de largeur nord. En l'absence de coefficients voisins ouest et nord, on effectue un codage laplacien fixe. Enfin, en présence de coefficients voisins ouest et nord, on identifie les valeurs de prédiction d'espérance et de largeur de la fonction laplacienne respectivement à la demi-somme des valeurs de prédiction d'espérance nord et ouest et à la demi-somme des valeurs de prédiction de largeur nord et ouest,
- on peut estimer les paramètres de prédiction des premier et second jeux par régression.

  • Par exemple, on peut estimer les premiers paramètres de prédiction des premier et second jeux par une première régression obtenue en résolvant une équation de type $W[n+1, m] = \theta.W[n,m]$, où $W[n,m]$ est la valeur d'un coefficient d'ondelettes et $W[n+1,m]$ est la valeur du coefficient d'ondelettes voisin de $W[n,m]$, et $\theta$ est un premier paramètre de prédiction. On peut par exemple résoudre la première équation à l'aide de la technique des moindres carrés, le premier paramètre de prédiction d'un premier ou second jeu étant alors égal au rapport entre les covariance et variance non normalisées des valeurs des coefficients d'ondelettes associés au premier ou second jeu.
  • De même, on peut estimer, d'une part, les deuxième et troisième paramètres de prédiction du premier jeu par une seconde régression obtenue en résolvant un premier système d'équations de type $|W[n,m] - \theta_N.W[n,m-1]| = \alpha_N + \beta_N |W[n,m-1]|$, où $W[n,m]$ est la valeur d'un coefficient d'ondelettes, $W_{n,m-1}$ est la valeur du coefficient d'ondelettes voisin nord de $W_{n,m}$, et $\theta_N$, $\alpha_N$ et $\beta_N$ sont respectivement des premier, deuxième et troisième paramètres de prédiction du premier jeu, et d'autre part, les deuxième et troisième paramètres de prédiction du second jeu par une seconde régression obtenue en résolvant un second système d'équations de type $|W[n,m] - \theta_O.W[n-1,m]| = \alpha_O + \beta_O |W[n-1,m]|$, où $W_{n-1,m}$ est la valeur du coefficient d'ondelettes voisin ouest de $W_{n,m}$, et $\theta_O$, $\alpha_O$ et $\beta_O$ sont respectivement des premier, deuxième et troisième paramètres de prédiction du second jeu. On peut par exemple résoudre les premier et second systèmes d'équation par la technique des moindres carrés,

- lorsqu'un coefficient d'ondelettes quantifié voisin présente une valeur nulle, on peut le substituer par le produit du pas de quantification, utilisé lors de l'étape de quantification, et d'une constante choisie, strictement supérieure à zéro et inférieure ou égale à un (1), et plus préférentiellement égale à 1/3,
- lors de l'étape de codage entropique, on peut procéder à la discrétisation de la fonction laplacienne après avoir déterminé les valeurs de prédiction de l'espérance et de la largeur. En variante, on peut procéder au codage entropique par itération après avoir déterminé les valeurs de prédiction de l'espérance et de la largeur.

L'invention porte également sur un dispositif dédié à la compression de données d'images numériques par transformée en ondelettes et comprenant des moyens de traitement munis, d'une première part, d'un module chargé de transformer les données d'image numériques qu'il reçoit en coefficients d'ondelettes répartis dans des sous-bandes, d'une deuxième part, d'un module chargé de quantifier les coefficients d'ondelettes, et d'une troisième part, d'un module chargé de coder de façon entropique les coefficients d'ondelettes quantifiés.

Ce dispositif se caractérise par le fait, d'une part, que ses moyens de traitement comprennent également un module chargé d'estimer, pour chaque coefficient de chaque sous-bande de l'image, de premier et second jeux de paramètres de prédiction, associés respectivement à des directions dites « nord-sud » et « ouest-est », en fonction des valeurs des coefficients d'ondelettes de ses voisins nord ou ouest, et d'autre part, que son module de codage entropique est chargé, d'une part, de déterminer, pour chaque coefficient de chaque sous-bande de l'image, des valeurs de prédiction de l'espérance et de la largeur d'une fonction laplacienne (ou gaussienne généralisée), représentative de sa densité de probabilité, en fonction des premier et/ou second jeux de paramètres de prédiction et du coefficient d'ondelettes quantifié de son voisin nord ou de son voisin ouest, et d'autre part, de coder de façon entropique les coefficients d'ondelettes quantifiés à l'aide des espérances et largeurs associées déterminées.

Le dispositif selon l'invention peut comporter d'autres caractéristiques qui pourront être prises séparément ou en combinaison, et notamment :

- son module de codage entropique peut être agencé de manière à déterminer pour la fonction laplacienne de chaque coefficient d'ondelettes quantifié, lorsque cela s'avère possible, des valeurs de prédiction d'espérance nord et ouest et des valeurs de prédiction de largeur nord et ouest. La valeur de prédiction d'espérance nord (ou ouest) est alors préférentiellement définie par le produit entre un premier paramètre de prédiction du premier (ou second) jeu et la valeur du coefficient d'ondelettes quantifié voisin nord (ou ouest), et la valeur de prédiction de largeur nord (ou ouest) est définie par la somme d'un deuxième paramètre de prédiction du premier (ou second) jeu et du produit d'un troisième paramètre de prédiction du premier (ou second) jeu et de la valeur absolue du coefficient d'ondelettes quantifié voisin nord (ou ouest). Dans ce cas, le module de codage entropique est préférentiellement agencé pour traiter quatre situations distinctes. En l'absence de coefficient voisin nord, il identifie les valeurs de prédiction d'espérance et de largeur de la fonction laplacienne aux valeurs de prédiction d'espérance ouest et de largeur ouest. En l'absence de coefficient voisin ouest, il identifie les valeurs de prédiction d'espérance et de largeur de la fonction laplacienne aux valeurs de prédiction d'espérance nord et de largeur nord. En l'absence de coefficients voisins ouest et nord, il effectue un codage laplacien fixe. Enfin, en présence de coefficients voisins ouest et nord, il identifie les valeurs de prédiction d'espérance et de largeur de la fonction laplacienne respectivement à la demi-somme des valeurs de prédiction d'espérance nord et ouest et à la demi-somme des valeurs de prédiction de largeur nord et ouest,

- son module d'estimation peut être agencé de manière à estimer les paramètres de prédiction des premier et second jeux par régression.

  • Par exemple, le module d'estimation peut être chargé d'estimer les premiers paramètres de prédiction des premier et second jeux à l'aide d'une première régression obtenue en résolvant une première équation de type $W[n+1,m] = \theta.W[n,m]$, où $W[n,m]$ est la valeur d'un coefficient d'ondelettes et $W[n+1,m]$ est la valeur du coefficient d'ondelettes voisin de $W[n,m]$, et $\theta$ est un premier paramètre de prédiction. Dans ce cas, le module d'estimation peut par exemple résoudre la première équation par la technique des moindres carrés. Le premier paramètre de prédiction d'un premier ou second jeu étant alors égal au rapport entre les covariance et variance non normalisées des valeurs des coefficients d'ondelettes associés au premier ou second jeu.
  • Par ailleurs, le module d'estimation peut être chargé, d'une part, d'estimer les deuxième et troisième paramètres de prédiction du premier jeu à l'aide d'une seconde régression obtenue en résolvant un premier système d'équations de type $|W[n,m] - \theta_N.W[n,m-1]| = \alpha_N + \beta_N |W[n,m-1]|$, où $W[n,m]$ est la valeur d'un coefficient d'ondelettes, $W_{n,m-1}$ est la valeur du coefficient d'ondelettes voisin nord de $W_{n,m}$, et $\theta_N$, $\alpha_N$ et $\beta_N$ sont respectivement des premier, deuxième et troisième paramètres de prédiction du premier jeu, et d'autre part, d'estimer les deuxième et troisième paramètres de prédiction du second jeu à l'aide d'une seconde régression obtenue en résolvant un second système d'équations de type $|W[n,m] - \theta_O.W[n-1,m]| = \alpha_O + \beta_O|W[n-1,m]|$, où $W_{n-1,m}$ est la valeur du coefficient d'ondelettes voisin ouest de $W_{n,m}$, et $\theta_O$, $\alpha_O$ et $\beta_O$ sont respectivement des premier, deuxième et troisième paramètres de prédiction du second jeu. Dans ce cas, le module d'estimation peut par exemple résoudre les premier et second systèmes d'équation à l'aide de la technique des moindres carrés,

- son module de codage entropique peut être agencé, lorsqu'un coefficient d'ondelettes quantifié voisin présente une valeur nulle, de manière à le substituer par le résultat d'un produit entre le pas de quantification, utilisé par le module de quantification, et une constante choisie, strictement supérieure à zéro et inférieure ou égale à un (1), et préférentiellement égale à 1/3,

- son module de codage entropique peut être agencé de manière à procéder à une discrétisation de la fonction laplacienne après avoir effectué les prédictions d'espérance et de largeur. En variante, le module de codage entropique peut être agencé de manière à procéder au codage par itération après avoir effectué les prédictions d'espérance et de largeur.

L'invention porte également sur un compresseur/décompresseur de données d'image numériques, ou codec, comprenant un dispositif de compression du type de celui présenté ci-avant.

D'autres caractéristiques et avantages de l'invention apparaîtront à l'examen de la description détaillée ci-après, et des dessins annexés, sur lesquels :

- la figure 1 illustre schématiquement, sous la forme d'un diagramme bloc fonctionnel, un dispositif de compression de données d'image numériques selon l'invention, et
- la figure 2 illustre une décomposition d'image en sous-bandes de niveaux de résolution différents.

Les dessins annexés pourront non seulement servir à compléter l'invention, mais aussi contribuer à sa définition, le cas échéant.

L'invention a pour objet de permettre la compression et la décompression de données d'images numériques par transformée en ondelettes.

La compression (ou le codage) par transformée en ondelettes consiste classiquement à décomposer une image I en sous-bandes $W_{j,k}$ dites LH, HL, HH et LL, puis à transformer les données d'image numériques $I[n,m]$, qui définissent l'intensité et la couleur des pixels de l'image I, en ondelettes, et plus précisément en un tableau $[n,m]$ de coefficients d'ondelettes, puis à quantifier les coefficients d'ondelettes avant de les coder de façon entropique.

n et m sont ici des indices entiers qui varient dans les limites de l'image : n désigne la colonne et appartient à l'intervalle $[0, n_{max} - 1]$ et m désigne la ligne et appartient à l'intervalle $[0, m_{max} - 1]$. Une sous-bande $W_{j,k}$ est donc définie par un tableau bidimensionnel de coefficients d'ondelettes $W_{j,k}[n,m]$ où les indices n et m varient dans des sous-intervalles $[0, n_{max}/2^{j}- 1]$ et $[0, m_{max}/2^{j}- 1]$. On note alors $N = n_{max} \cdot m_{max}$ le nombre de pixels de l'image I, et $N_{j,k} = N / 2^{2j}$ le nombre de coefficients d'ondelettes dans une sous-bande $W_{j,k}$.

Les sous-bandes sont codées séparément les unes des autres, la sous-bande passe bas étant codée avec un codage différentiel de type DPCM et les différences résultantes pouvant être codées avec une méthode similaire à celle utilisée pour une sous-bande passe-haut.

Par ailleurs, on désigne par $W_{j,k}[n,m-1]$ et $W_{j,k}[n-1,m]$ les voisins dits « nord » et « ouest » d'un coefficient d'ondelettes $W_{j,k}[n,m]$. Les coefficients d'ondelettes à coder sont parcourus dans un ordre particulier (ordre lexicographique croissant sur le couple (n,m)) afin de garantir qu'un coefficient $W_{j,k}[n,m]$ sera toujours codé après ses voisins nord et ouest qui servent à la détermination de sa valeur.

La compression selon l'invention diffère d'une compression par transformée en ondelettes classique notamment par le fait qu'elle comprend entre son étape de transformation (classique) et son étape de quantification (classique), une étape dans laquelle on estime, pour chaque coefficient $W_{j,k}[n,m]$ de chaque sous-bande $W_{j,k}$ d'une image I, de premier et second jeux de paramètres de prédiction, associés respectivement à des directions nord-sud et ouest-est, en fonction des valeurs des coefficients d'ondelettes de ses voisins nord $W_{j,k}[n,m-1]$ ou ouest $W_{j,k}[n-1,m]$.

Ces premier et second jeux de paramètres de prédiction sont ensuite utilisés lors de l'étape de codage entropique pour déterminer pour chaque coefficient d'ondelettes $W_{j,k}[n,m]$ de chaque sous-bande $W_{j,k}$ de l'image I des valeurs de prédiction de l'espérance (ou moyenne) μ et de la largeur σ d'une fonction (ou distribution) de type laplacienne représentative de sa densité de probabilité en fonction d'un coefficient d'ondelettes quantifié voisin (nord ou ouest) :

$$p(c|c') = \frac{e-\left|\frac{x-\mu(c')}{\sigma(c')}\right|}{2\sigma(c')}$$

où c représente un coefficient d'ondelettes $W_{j,k}[n,m]$, c' représente soit le coefficient d'ondelettes voisin nord $W_{j,k}[n,m-1]$ de c, soit le coefficient d'ondelettes voisin ouest $W_{j,k}[n-1,m]$ de c, et $\mu(c')$ et $\sigma(c')$ représentent respectivement l'espérance et la largeur en fonction du coefficient d'ondelettes voisin c' considéré.

Il est ici rappelé que l'espérance μ et la largeur σ d'une distribution laplacienne de densité P sont définies par les relations suivantes :

$$\mu = \int xP(x)dx$$

$$\sigma = \int |x - \mu| \, P(x)dx$$

On va maintenant décrire plus en détail les différentes étapes de la compression selon l'invention.

Comme indiqué ci-avant, la compression commence par une étape de transformation des pixels de l'image I en coefficients d'ondelettes $W_{j,k}[n,m]$. Cette étape de transformation étant tout à fait classique, elle ne sera pas décrite ici. Pour la mettre en oeuvre on peut par exemple utiliser la transformée en ondelettes bi-orthogonales 7-9 de Daubechies/Antonini. Cette transformée n'est pas rigoureusement orthogonale, mais elle l'est quasiment, ce qui permet de conserver l'énergie des images à quelques pour cent près.

A la fin de cette étape de transformation, on dispose donc pour une sous-bande donnée $W_{j,k}$ de l'ensemble de ses coefficients d'ondelettes $W_{j,k}[n,m]$.

L'étape de transformation est suivie d'une étape d'estimation de paramètres de prédiction pour chaque coefficient d'ondelettes $W_{j,k}[n,m]$ de chaque sous-bande $W_{j,k}$. Dans ce qui suit, et afin de simplifier les notations on ne précisera plus les indices j et k des sous-bandes. Par conséquent, on désignera par $W[n,m]$ un coefficient d'ondelettes appartenant à une sous-bande $W_{j,k}[n,m]$, qu'il s'agisse d'une sous-bande LH, HH, ou HL, ou encore LL (par exemple codée en DPCM par un parcours en boustrophédon).

Comme indiqué précédemment, l'étape d'estimation est destinée à déterminer des premier et second jeux de paramètres de prédiction qui permettront ultérieurement (lors de l'étape de codage entropique) de prédire les valeurs de l'espérance (ou moyenne) $\mu$ et de la largeur $\sigma$ d'une fonction (ou distribution) laplacienne représentative de la densité de probabilité d'un coefficient d'ondelettes quantifié compte tenu de la valeur prise par le coefficient d'ondelettes quantifié de l'un au moins de ses voisins nord et ouest.

L'espérance $\mu$ et la largeur $\sigma$ sont définies par rapport aux paramètres de prédiction des premier et second jeux. Par exemple, chaque jeu comporte trois paramètres de prédiction $\theta$ (premier), $\alpha$ (deuxième) et $\beta$ (troisième), et les relations liant ces paramètres aux espérance $\mu$ et largeur $\sigma$ prennent les formes suivantes:

$$\mu = \theta.c' \tag{1}$$

$$\sigma = \alpha + \beta.c' \tag{2}$$

où, comme indiqué précédemment c' désigne le contexte représentant soit le coefficient d'ondelettes voisin nord $W[n,m-1]$ de c (ou $W[n,m]$), soit le coefficient d'ondelettes voisin ouest $W[n-1,m]$ de c.

En fait, comme on le verra plus loin, on utilise deux prédictions d'espérance et de largeur selon le voisin considéré (nord ou est) : une prédiction nord porte sur l'espérance nord $\mu_N$ et la largeur nord $\sigma_N$, et une prédiction ouest porte sur l'espérance ouest $\mu_N$ et la largeur ouest $\sigma_N$. Le premier jeu est alors associé à la prédiction nord et comporte les paramètres $\theta_N$, $\alpha_N$ et $\beta_N$, tandis que le second jeu est associé à la prédiction ouest et comporte les paramètres $\theta_O$, $\alpha_O$ et $\beta_O$.

Les relations (1) et (2) présentées ci-dessus, à titre d'exemple, définissent des règles de calcul qui permettent d'estimer simplement les paramètres $\theta$, $\alpha$ et $\beta$ (nord et ouest) avec des régressions.

Préférentiellement, on commence par estimer $\theta_N$ et $\theta_O$ par une première régression. Celle-ci s'obtient en résolvant une équation du type :

$$C_{n+1} = \theta.c$$

En utilisant, par exemple, la technique des moindres carrés, on obtient alors le premier paramètre $\theta$ pour chaque jeu (nord ou ouest) :

$$\theta = \frac{\sum_{n} c_n c_{n+1}}{\sum_{n} c_n^2}$$

La relation ci-dessus peut être réécrite comme suit, pour les jeux nord et ouest :

$$\theta_N = \frac{Cov_N}{Var}$$

$$\theta_O = \frac{Cov_O}{Var}$$

où $Cov_N$, $Cov_O$ et $Var$ sont respectivement les covariances Nord et Ouest et la variance, non normalisées, données par les relations suivantes :

$$Var = \sum_{n,m} W[n,m]^2$$

$$Cov_N = \sum_{n,m} W[n,m] W[n,m-1]$$

$$Cov_O = \sum_{n,m} W[n,m] W[n-1,m]$$

Puis, on procède à l'estimation des paramètres de prédiction nord $\alpha_N$ et $\beta_N$ par une seconde régression. Celle-ci s'obtient en résolvant un premier système d'équations du type :

$$|W[n,m] - \theta_N.W[n,m-1]| = \alpha_N + \beta_N \, |W[n, m-1]| \qquad (3)$$

En imposant alors les définitions suivantes :

$$M_{11} = \sum_{n,m} 1 \quad (4)$$

$$M_{12} = M_{21} = \sum_{n,m} |W[n,m-1]| \quad (5)$$

$$M_{22} = \sum_{n,m} |W[n,m-1]|^2 \quad (6)$$

$$Y_1 = \sum_{n,m} |W[n,m] - \theta_N W[n,m-1]| \quad (7)$$

$$Y_2 = \sum_{n,m} |(W[n,m] - \theta_N W[n,m-1]) W[n,m-1]| \quad (8)$$

on obtient les paramètres de prédiction $\alpha_N$ et $\beta_N$ en résolvant le système :

$$\begin{pmatrix} M_{11} & M_{12} \\ M_{21} & M_{22} \end{pmatrix} \begin{pmatrix} \alpha_N \\ \beta_N \end{pmatrix} = \begin{pmatrix} Y_1 \\ Y_2 \end{pmatrix} \quad (9)$$

Les paramètres de prédiction ouest $\alpha_O$ et $\beta_O$ sont calculés de la même manière, en résolvant un second système d'équations du type :

$$|W[n,m] - \theta_O.W[n-1,m]| = \alpha_O + \beta_O \, |W[n-1,m]| \quad (10)$$

Cela revient à résoudre le système défini par la relation (9), en utilisant des coefficients définis par les relations (4) à (8) dans lesquelles $\theta_N$ est remplacé par $\theta_O$ et W[n,m-1] est remplacé par W[n-1,m], et en remplaçant $\alpha_N$ par $\alpha_O$ et $\beta_N$ par $\beta_O$.

Une fois que l'on a déterminé les paramètres de prédiction nord ($\theta_N$, $\alpha_N$ et $\beta_N$) et ouest ($\theta_O$, $\alpha_O$ et $\beta_O$) de chaque coefficient d'ondelettes $W_{j,k}[n,m]$ d'une sous-bande $W_{j,k}$, on passe à l'étape de quantification.

Cette étape de quantification étant tout à fait classique, elle ne sera pas décrite ici. Pour la mettre en oeuvre on peut par exemple utiliser un quantificateur scalaire standard du type

$$Q(W[n,m]) = \left\lfloor \frac{W[n,m]}{T} \right\rfloor$$

où $T$ est la largeur du pas de quantification.

Il est simplement rappelé que l'étape de quantification consiste à quantifier les coefficients d'ondelettes $W_{j,k}$ [n,m] de chaque sous-bande $W_{j,k}$ à partir d'un pas de quantification T soit fixe, soit déterminé par un module de planification.

En raison de la nature même des procédés de compression, le débit de sortie (du dispositif de compression) est directement proportionnel à l'entropie du signal d'entrée (données d'images numériques à compresser). Or, la quantité d'information à transmettre varie généralement au cours du temps puisque les caractéristiques du signal d'entrée varient elles-mêmes avec le temps. Par conséquent, dans le but d'optimiser l'utilisation du canal de transmission, on minimise les fluctuations de débit en sortie du dispositif de compression en effectuant une régulation de débit. Cela est même indispensable lorsque le canal de transmission nécessite un débit constant.

Pour permettre une telle régulation de débit en temps réel, il est impératif de mettre en oeuvre des algorithmes de planification de débit rapides (exempts d'optimisation sous contraintes et exempts d'itérations) de manière à ne pas ralentir l'acquisition des images lors du défilement du satellite ou, dans le cadre du codage video, pour ne pas générer d'effet de saccade.

Deux types de planification de débit ont été proposés à cet effet : la planification avec allocation de débit et la planification de débit pure.

La planification avec allocation de débit consiste à laisser le module de planification, d'une part, choisir indépendamment les pas de quantification des différentes sous-bandes de sorte que le débit total soit égal à une consigne de débit, et d'autre part, choisir la façon dont ce débit doit être réparti dans les différentes sous-bandes.

La planification de débit pure consiste à lier les pas de quantification des différentes sous-bandes (en général ils sont identiques). Dans ce cas, le module de planification se contente de choisir le pas de quantification unique pour toutes les sous-bandes qui permettra d'atteindre une consigne de débit fixée.

Par ailleurs, afin de relâcher la contrainte de débit fixe on peut contrôler la qualité de la compression (et donc de la décompression) pour imposer une constance de la qualité des images en sortie du dispositif de compression au gré du défilement du satellite ou de l'arrivée des images en codage vidéo.

A cet effet, il a été proposé un procédé de planification de qualité consistant à déterminer un pas de quantification uniforme T permettant d'obtenir une qualité de codage donnée (généralement fixée en dB). Ce procédé consiste tout d'abord à calculer la distorsion totale D correspondant à un pas de quantification donné T, puis à déterminer par dichotomie le pas de quantification T permettant d'atteindre une consigne de distorsion donnée D.

D'une façon plus précise, dans le domaine de l'allocation de débit ou du contrôle de qualité il existe principalement trois types de procédé.

Un premier type concerne les procédés qui réalisent une optimisation sous contraintes par une minimisation d'un lagrangien sous la forme J = D+ λR (où D est la distorsion et R le débit), avec pour contrainte R = Ro (où Ro est un débit de consigne).

Un deuxième type concerne les procédés fondés sur une modélisation de la chaîne de compression pour établir une règle qui lie le débit R au pas de quantification global T ou bien la distorsion D au débit R.

Ces deux procédés ne peuvent cependant pas être utilisés lorsque l'on a besoin de travailler avec des décompositions non uniforme, comme par exemple lors d'une re-décomposition de sous bandes pour la prise en compte de la FTM (Fonction de Transfert de Modulation) en vue d'une déconvolution ou d'une allocation par sous-bandes dans le cas d'images multicomposantes.

Un troisième type concerne les procédés fondés sur une modélisation de la chaîne de compression pour établir une règle qui lie le débit R au pas de quantification local T à chacune des sous-bandes ou bien la distorsion D au débit R. Un procédé de ce type, adapté à l'allocation de débit par sous-bandes à l'aide d'un codeur arithmétique d'ordre 1, est notamment décrit dans le document FR 02/05724.

Un autre but de l'invention est d'améliorer le résultat procuré par le compresseur (ou codeur) décrit dans le document précité en établissant une règle optimale de planification du débit ou de la qualité d'image d'un compresseur par transformée en ondelettes grâce au gain de codage engendré par la prise en compte des dépendances entre coefficients d'ondelettes intra-bande.

Pour atteindre ce but, il est tout d'abord nécessaire de modéliser le comportement d'une sous-bande en termes de débit R et de distorsion D, en fonction des paramètres de prédiction estimés $\theta$, $\alpha$ et $\beta$ de la fonction laplacienne conditionnelle, déterminés lors de l'étape d'estimation présentée ci-avant.

Pour effectuer cette modélisation, il est possible d'utiliser simultanément, pour chaque sous-bande, les deux directions Nord-Sud et Ouest-Est, ou en d'autres termes les premier ($\theta_N$, $\alpha_N$, $\beta_N$) et second ($\theta_O$, $\alpha_O$, $\beta_O$) jeux de paramètres de prédiction. Mais, cela imposerait d'effectuer la carte d'une fonction de grande dimension, et de plus, on peut montrer que le codage d'un coefficient d'ondelettes connaissant un seul coefficient d'ondelettes non quantifié voisin (nord ou ouest) donne un résultat de codage semblable à un codage utilisant les coefficients d'ondelettes non quantifiés des voisins nord et ouest. Par conséquent, dans ce qui suit on se place dans une situation dans laquelle on n'utilise qu'un seul coefficient d'ondelettes non quantifié voisin (nord ou ouest).

Dans cette situation « monodirectionnelle », on peut définir une chaîne de dépendance, dite « de Markov », par la relation suivante :

$$p(X_n \mid X_{n-1}) = \frac{1}{2(\alpha + \beta|X_{n-1}|)}\, e^{\,-|X_n - \theta X_{n-1}|/(\alpha + \beta|X_{n-1}|)}$$

On peut alors montrer que si pour un jeu de paramètres de prédiction donnés $\theta$, $\alpha$ et $\beta$, l'espérance et la variance de la variable aléatoire $X_n$ restent bornées quand n croît, alors la suite de variables aléatoires est ergodique.

Pour calculer le débit R et la distorsion D d'une telle suite, pour un pas de quantification T donné, on peut utiliser une méthode de Monte-Carlo consistant à faire des tirages d'une séquence de la chaîne de Markov, puis à estimer les espérances de débit R et de distorsion D par symbole en effectuant une moyenne sur des termes consécutifs de la séquence.

Ces calculs de débit R et de distorsion D présentent un sens lorsque la chaîne de Markov est ergodique, et notamment dès que sa largeur (ou variance) est bornée.

Les tirages de la chaîne de Markov peuvent être faits de la manière suivante. On calcule tout d'abord par récurrence $X_{n+1}$ en fonction de $X_n$ par une formule du type :

$$X_{n+1} = S_n(\alpha + \beta\,|X_n|)\,\log U_n + \theta X_n$$

où $S_n$ et $U_n$ sont des variables aléatoires indépendantes, chaque $S_n$ valant +1 et -1 avec des probabilités respectives 1/2 et 1/2, et $U_n$ ayant une densité uniforme sur l'intervalle [0,1].

On doit ensuite estimer des courbes de débit et de distorsion. Pour ce faire, on doit tout d'abord estimer les relations qui lient le pas de quantification T au débit R et à la distorsion D, pour une gamme de paramètres de prédiction $\theta$, $\alpha$ et $\beta$ pertinente.

Par définition, la gamme des valeurs pertinentes est celle pour laquelle la chaîne de Markov est ergodique. On peut remarquer que l'ergodicité ne dépend pas du paramètre de prédiction $\alpha$ qui est un paramètre d'échelle. En effet, si une chaîne de variables aléatoires $X_n$ est une chaîne de Markov pour les paramètres de prédiction $\theta$, $\alpha$ et $\beta$, alors la chaîne $\lambda X_n$ est une chaîne de Markov pour les paramètres $\theta$, $\lambda\alpha$ et $\beta$. On peut donc se limiter au cas $\alpha = 1$.

Par ailleurs, il est naturel de limiter les valeurs de $\beta$ à l'intervalle [0,1], puisque $\beta$ ne peut pas être négatif. Si $\beta$ est plus grand que 1, il est vraisemblable que la variance de la distribution associée tende vers l'infini (par un étalement progressif). De même, θ doit présenter une valeur absolue inférieure à 1, sans quoi le processus risquerait d'avoir un comportement de marche aléatoire, lequel n'est pas ergodique. En revanche, le domaine des paramètres de prédiction θ licites (les autres paramètres de prédiction étant fixés) est nécessairement symétrique, puisque si une suite $X_n$ est de paramètres θ, α et β, la suite $(-1)^n X_n$ est de paramètres -θ, α et β. Par un raisonnement analogue, on peut même montrer que le domaine en question est un intervalle de la forme ]-$θ_0$, $θ_0$[.

Faute de pouvoir définir clairement par des méthodes analytiques un domaine des couples (β, θ) pour lequel la chaîne de Markov est ergodique, on en définit un sous-ensemble pour lequel la largeur estimée de la variable aléatoire $E(|X_n|)$ est bornée par une limite fixée.

Lorsque l'on trace la carte de la variable aléatoire $E(X_n)$ en fonction des paramètres de prédiction β et θ, on constate que l'estimation d'une espérance devient de plus en plus coûteuse (en nombre d'itérations) au fur et à mesure que l'on s'approche de la non-ergodicité. Par ailleurs, en traçant des sections de cette fonction de deux variables et de son inverse, on peut constater que son inverse est sensiblement linéaire en β :

$$E(X_n) = \frac{1}{A(\theta) - B(\theta)\beta}$$

où A et B sont des fonctions à valeurs positives.

Par conséquent, pour chaque section de cette fonction à deux variables, à θ constant, la pente et l'ordonnée à l'origine peuvent être estimées par une régression très stable. Par exemple, les fonctions $A(\theta)$ et $B(\theta)$ peuvent être paramétrées par décomposition dans une base de Deslauriers-Dubuc. Il est donc globalement possible d'estimer les limites d'ergodicité avec une grande précision.

Le paramétrage des fonctions $A(\theta)$ et $B(\theta)$ au voisinage de un (1) sont plus précis si on décompose dans une base de Deslauriers-Dubuc non pas les fonctions $A(\theta)$ et $B(\theta)$, mais plutôt $A(\theta)^2$ et $B(\theta)^2$. En effet les graphes de ces fonctions semblent montrer qu'elles ont un zéro de la forme $(1 - \theta)^{1/2}$ en un (1) pour A, et pour une valeur $θ > 1$ pour B. La décomposition dans la base de Deslauriers-Dubuc de chaque fonction coûte neuf coefficients.

Si l'on appelle $R(\theta, \alpha, \beta, T)$ la fonction de débit d'une sous-bande en fonction des paramètres de prédiction θ, α et β et du pas de quantification T, on peut la définir par la relation suivante :

$$R(\theta, \alpha, \beta, T) = E(-P(Q(X_n)|X_{n-1}) \log_2 P(Q(X_n)|X_{n-1}))$$

où $X_n$ est une chaîne de Markov laplacienne de paramètres θ, α et β, et Q un quantificateur de pas T.

Le débit R peut être estimé par des moyennes de Monte-Carlo calculées sur des tirages de la chaîne de Markov, donc par moyennage de la suite :

$$R_n = -P_n \log_2 P_n$$

où

$$P_n = \frac{1}{2} \int Q(x) = Q(X_n) \frac{1}{\alpha + \beta|X_{n-1}|} e^{-|x-\theta X_{n-1}|/(\alpha + \beta|X_{n-1}|)} dx$$

Ces moyennes peuvent être estimées pour des paramètres de prédiction θ et β qui sont dans le domaine d'ergodicité identifié plus haut. On peut utiliser l'homogénéité de la fonction de débit R pour réduire la dimensionnalité du problème, du fait que $R(\theta, \alpha, \beta, T) = R(\theta, 1, \beta, T/\alpha)$.

Si l'on appelle maintenant $D(\theta, \alpha, \beta, T)$ la fonction de distorsion de la chaîne de Markov, qui servira à modéliser la distorsion D d'une sous-bande quantifiée en fonction des paramètres de prédiction θ, α et β et du pas de quantification T, on peut la définir par la relation suivante :

$$D(\theta, \alpha, \beta, T) = E(|Q(X_n) - X_n|^2)$$

où $X_n$ est de nouveau la chaîne de Markov laplacienne de paramètres θ, α et β, et Q un quantificateur de pas T.

Ici encore, la distorsion D peut être estimée par des moyennes de Monte-Carlo de la suite $D_n = |X_n - Q(X_n)|$. Il faut en effet connaître la distribution stationnaire associée à la chaîne de Markov. Or, il n'en existe pas d'expression explicite, de sorte qu'il faut recourir à une méthode de Monte-Carlo.

Ici encore, l'homogénéité permet de réduire la dimension du problème

$$D(\theta, \alpha, \beta, T) = \alpha^2 D(\theta, 1, \beta, T/\alpha)$$

Etant donné que le domaine d'ergodicité contient seulement trois points singuliers (ou coins), on peut utiliser un maillage triangulaire du domaine d'ergodicité concerné et utiliser des fonctions splines triangulaires pour représenter les fonctions de distorsion D et de débit R sur ce domaine d'ergodicité. Cependant, on peut montrer que le coin supérieur du domaine est un point où les fonctions D et R peuvent avoir de grandes variations, et qu'il est préférable d'utiliser un maillage plus fin autour de ce point, comme par exemple un maillage carré projeté dans le domaine d'ergodicité.

Pour $\theta$, $\beta$ dans le domaine d'ergodicité maillé, $\alpha = 1$ et la variable T (pas de quantification) variant entre $10^{-3}$ et 1000, des estimations de la distorsion D et du débit R peuvent être faites par la méthode de Monte-Carlo sur des grandes séries (typiquement quelques millions de tirages). On obtient ainsi une carte de D et R sur un domaine d'ergodicité qui couvre une gamme de paramètres très large.

Ensuite, la fonction inverse (qui associe un pas de quantification T à un débit R) peut être calculée et décomposée dans une base de Deslauriers-Dubuc, par inversion de l'application $\theta$, $\beta$, T $\rightarrow$ R en $\theta$, $\beta$, R$\rightarrow$ T.

Dans cette inversion, il faut prendre un paramétrage en R soit linéaire, soit logarithmique, afin de représenter fidèlement la fonction T(R) dans des régions où elle varie très brutalement.

On peut ensuite effectuer la prédiction des relations entre le débit R, le pas de quantification T et la distorsion D pour une sous-bande donnée.

Comme on l'a vu précédemment, pour chaque sous-bande la prédiction d'un coefficient d'ondelettes se fait préférentiellement à l'aide de deux coefficients d'ondelettes voisins (nord et ouest), alors que les modèles de débit R et de distorsion D présentés ci-avant n'utilisent qu'un contexte à un seul coefficient d'ondelettes voisin.

Pour associer un modèle monodimensionnel à une sous-bande, il faut alors réduire la paire de premier et second jeux de paramètres de prédiction, associés à deux fonctions laplaciennes marginales, à un unique jeu. La réduction utilisée pour la planification de débit est par exemple la suivante :

$$\alpha = \sqrt{\alpha_N \alpha_O}$$

$$\beta = \frac{\beta_N + \beta_O}{2\sqrt{2}}$$

$$\theta = \frac{|\theta_N| + |\theta_O|}{2}$$

On peut voir cette réduction comme un moyennage soit arithmétique, soit géométrique. Seul $\beta$ est en plus encore contracté d'un facteur $\sqrt{2}$, censé modéliser la réduction d'incertitude liée à l'usage d'un contexte double.

Le choix du facteur $\sqrt{2}$ peut être justifié par une approche bayésienne simple : deux mesures, bruitées par des bruits indépendants combinés, peuvent être combinées (par moyennage) en réduisant l'écart-type du bruit de mesure d'un facteur $\sqrt{2}$. Le choix de cette convention est certes arbitraire, mais il permet d'obtenir des résultats raisonnables de prédiction pour des images classiques. Bien entendu, d'autres choix peuvent être envisagés pour affiner cette réduction.

Compte tenu de ce qui a été précisé ci-avant, il est désormais possible d'élaborer simplement des algorithmes de planification.

Ainsi, dans le cas d'une planification de débit pure, consistant à déterminer un pas de quantification uniforme T permettant d'atteindre un débit de consigne global pour une image, il suffit de calculer pour chaque sous-bande une prédiction de débit en fonction d'un pas de quantification T, soit donc un débit total R. Pour ce faire, on détermine par dichotomie la valeur du pas de quantification T qui rend le débit R, correspondant à T, égal à la consigne de débit.

Dans le cas d'une planification par allocation de débit, on cherche à déterminer librement un pas de quantification T pour chaque sous-bande, afin de minimiser la distorsion D pour une consigne de débit globale R. Pour ce faire, on découpe le débit total R en tronçons de petite taille, et on distribue ces tronçons de façon itérative entre les différentes sous-bande, en donnant à chaque fois un tronçon à la sous-bande qui réduit le plus la distorsion globale D. Comme indiqué précédemment, un exemple de mise en oeuvre de cette méthode est décrit dans le document FR 02/05 724.

Dans le cas d'une planification de qualité, on cherche à déterminer un pas de quantification uniforme T permettant d'obtenir une qualité de codage donnée (fixée en dB). Pour ce faire, on calcule la distorsion totale D qui correspond à un pas de quantification donné T, puis on détermine par dichotomie le pas de quantification T qui permet d'atteindre la consigne de distorsion donnée D.

A la fin de l'étape de quantification, avec ou sans planification, on dispose pour une sous-bande donnée $W_{j,k}$ de l'ensemble de ses coefficients d'ondelettes quantifiés $Q(W_{j,k}[n,m])$.

On passe alors à l'étape de codage entropique dit « contextuel ». Cette étape se décompose en deux phases, l'une dédiée à la prédiction des espérances $\mu$ et largeurs $\sigma$, à partir, notamment, des premiers et seconds jeux de paramètres de prédiction déterminés lors de l'étape d'estimation, et l'autre dédiée au codage entropique proprement dit.

Le mode de prédiction de l'espérance $\mu$ et de la largeur $\sigma$ associées à un coefficient d'ondelettes quantifié dépend de son contexte, ou en d'autres termes des coefficients d'ondelettes voisins (lorsqu'ils existent). Quatre situations peuvent être rencontrées.

En l'absence de coefficient d'ondelettes voisin nord (W[n,m-1]), c'est-à-dire lorsque le coefficient d'ondelettes (W[n,1]) appartient à la première ligne de la sous-bande concernée, on identifie les valeurs de prédiction d'espérance $\mu$ et de largeur $\sigma$ de la fonction laplacienne (P) aux valeurs de prédiction d'espérance ouest $\mu_O$ et de largeur ouest $\sigma_O$, soit $\mu = \mu_O$ et $\sigma = \sigma_O$.

En l'absence de coefficient d'ondelettes voisin ouest (W[n-1,m]), c'est-à-dire lorsque le coefficient d'ondelettes (W[1,m]) appartient à la première colonne de la sous-bande concernée, on identifie les valeurs de prédiction d'espérance $\mu$ et de largeur $\sigma$ de la fonction laplacienne (P) aux valeurs de prédiction d'espérance nord $\mu_N$ et de largeur nord $\sigma_N$, soit $\mu = \mu_N$ et $\sigma = \sigma_N$.

En l'absence de coefficients d'ondelettes voisins ouest (W[n-1,m]) et nord (W[n,m-1]), c'est-à-dire lorsque le coefficient d'ondelettes (W[1,1]) appartient à la première ligne et à la première colonne de la sous-bande concernée, on effectue un codage laplacien fixe, c'est-à-dire un codage laplacien d'ordre 0 fondé sur la prise en compte d'une densité de probabilité non conditionnelle.

Enfin, en présence de coefficients d'ondelettes voisins ouest et nord, on identifie les valeurs de prédiction d'espérance $\mu$ et de largeur $\sigma$ de la fonction laplacienne (P) respectivement à la demi-somme des valeurs de prédiction d'espérance nord $\mu_N$ et ouest $\mu_O$ et à la demi-somme des valeurs de prédiction de largeur nord $\sigma_N$ et ouest $\sigma_O$, soit $\mu = [(\mu_N + \mu_O) / 2]$ et $\sigma = [(\sigma_N + \sigma_O)/2]$.

Les valeurs de $\mu_N$, $\mu_O$, $\sigma_N$ et $\sigma_O$ sont déterminées à partir des relations (1) et (2) qui sont mentionnées de nouveau ci-après pour les prédictions nord et ouest :

$$\mu_N = \theta_N . Q(W[n,m-1]) \tag{1a}$$

$$\mu_O = \theta_O . Q(W[n-1,m]) \tag{1b}$$

$$\sigma_N = \alpha_N + \beta_N . |Q(W(n,m-1])| \tag{2a}$$

$$\sigma_O = \alpha_O + \beta_O . |Q(W[n-1,m])| \tag{2b}$$

où $Q(W[n,m-1])$ et $Q(W[n-1,m])$ sont les coefficients d'ondelettes quantifiés des voisins nord et ouest d'un coefficient d'ondelettes quantifié $Q(W[n,m])$.

Il est important de noter que le calcul de la largeur $\sigma$ est généralement biaisée lorsque la valeur du coefficient d'ondelettes quantifié $Q(W[n,m-1])$ ou $Q(W[n-1,m])$ associé est nulle.

Dans ce cas, en constatant que $Q(W[n,m])$ représente l'espérance $E(W[n,m] | Q(W[n,m]))$ de $W[n,m]$ connaissant sa valeur quantifiée, on peut en déduire la relation suivante lorsque $Q(W[n,m]) = 0$ :

$$E(|W[n,m] \,||\, Q(W[n,m])) = T/2 \neq |Q(W[n,m])|$$

où T est le pas de quantification choisi à l'étape de quantification par le quantificateur (supposé ici être du type dit « à double boîte 0 »).

Et, partant de cette déduction, on peut alors remplacer dans les relations (1a), (1b), (2a) et (2b) $Q(W[n,m-1])$ et $Q(W[n-1,m])$, lorsqu'ils sont nuls, par une constante $\xi T$ choisie. $\xi$ est une constante strictement supérieure à zéro et inférieure ou égale à 1. Une valeur de $\xi$ égale à ½ est en théorie optimale, mais, dans le cas d'une quantification à haute résolution et de fonctions laplaciennes très pentues dans la boîte 0, il est préférable de choisir $\xi$ égale à 1/3.

Une fois que l'on est en possession de l'espérance $\mu$ et de la largeur $\sigma$ associées à chaque coefficient d'ondelettes quantifié d'une sous-bande, on peut passer à la phase de codage entropique.

Pour ce faire, il suffit de discrétiser une laplacienne qui n'est pas nécessairement centrée dans la boîte 0 du quantificateur. La discrétisation consiste ici à échantillonner la laplacienne continue.

La décompression de données d'images numériques, compressées au moyen du procédé de compression qui vient d'être décrit, consiste à enchaîner les quatre étapes dudit procédé dans l'ordre inverse. Par conséquent, le procédé de décompression ne sera pas décrit ci-après.

L'invention porte également sur un dispositif de compression (ou codeur) de données d'images numériques par transformée en ondelettes. Ce dispositif ayant pour objet de mettre en oeuvre le procédé de compression décrit ci-avant, seuls ses modules fonctionnels seront présentés ci-après en référence à l'unique figure.

Le dispositif de compression D, selon l'invention, comprend un module de traitement PM décomposable en au moins quatre modules.

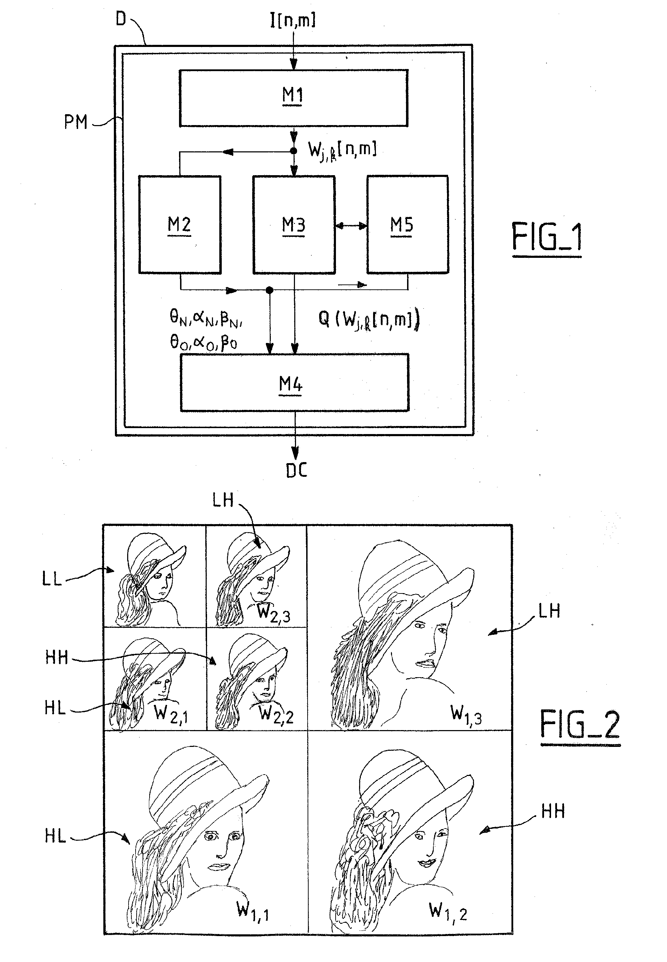

Un premier module M1 est alimenté en données d'image numériques I[n,m] définissant des images I et est chargé, d'une part, de décomposer chaque image I sur une base d'ondelettes. Cette transformation en sous-bandes $W_{j,k}$ (dites LH, HL, HH et LL comme indiqué sur la figure 2) et sur plusieurs niveaux de résolution j. Chaque sous-bande est représentée par un tableau [n,m] de coefficients d'ondelettes $W_{j,k}[n,m]$. Il s'agit d'un module traditionnel, parfaitement connu de l'homme de l'art, mettant en oeuvre, par exemple, la transformée en ondelettes bi-orthogonales 7-9 de Daubechies/Antonini.

Un deuxième module M2 est alimenté en coefficients d'ondelettes $W_{j,k}[n,m]$ par le premier module de transformation M1. Il est chargé d'estimer, pour chaque coefficient d'ondelettes $W_{j,k}[n,m]$ de chaque sous-bande d'ondelettes $W_{j,k}$ d'une image I, des premier ($\theta_N$, $\alpha_N$ et $\beta_N$) et second ($\theta_O$, $\alpha_O$ et $\beta_O$) jeux de paramètres de prédiction, associés respectivement à des directions nord-sud et ouest-est, en fonction des valeurs des coefficients d'ondelettes de ses voisins nord $W_{j,k}[n,m-1]$ ou ouest $W_{j,k}[n-1,m]$. Pour ce faire, le deuxième module d'estimation M2 met en oeuvre par exemple la technique d'estimation à double régression décrite précédemment.

Un troisième module M3 est alimenté en coefficients d'ondelettes $W_{j,k}[n,m]$ par le premier module de transformation M1 et est chargé de les quantifier pour délivrer des coefficients d'ondelettes quantifiés $Q(W_{j,k}[n,m])$. Il s'agit d'un module de quantification scalaire (ou quantificateur) traditionnel, parfaitement connu de l'homme de l'art.

Un quatrième module M4 est alimenté, d'une part, en coefficients d'ondelettes quantifiés $Q(W_{j,k}[n,m])$ par le troisième module de quantification M3, et d'autre part, en premier et second jeux de paramètres de prédiction (0, $\alpha$ et $\beta$) par le deuxième module d'estimation M2. Il est chargé de coder de façon entropique et contextuelle les coefficients d'ondelettes quantifiés $Q(W_{j,k}[n,m])$ à partir des valeurs des paramètres de prédiction nord ($\theta_N$, $\alpha_N$ et $\beta_N$) et ouest ($\theta_O$, $\alpha_O$ et $\beta_O$) des premier et second jeux.

Plus précisément, le quatrième module d'estimation M4 est agencé de manière à déterminer pour chaque coefficient d'ondelettes quantifié $Q(W_{j,k}[n,m])$, les valeurs de prédiction d'espérance $\mu$ et de largeur $\sigma$ de la fonction laplacienne P associée, compte tenu des valeurs des coefficients d'ondelettes quantifiés de ses voisins nord $W_{j,k}[n,m-1]$ et/ou ouest $W_{j,k}[n-1,m]$ et des paramètres de prédiction nord ($\theta_N$, $\alpha_N$ et $\beta_N$) et ouest ($\theta_O$, $\alpha_O$ et $\beta_O$) associés, puis à coder de façon entropique chaque coefficient d'ondelettes quantifié $Q(W_{j,k}[n,m])$ compte tenu des valeurs de prédiction d'espérance $\mu$ et de largeur $\sigma$ qu'il a déterminées. Pour ce faire, le quatrième module de codage entropique M4 met en oeuvre par exemple les techniques de détermination de prédiction et de codage entropique contextuel décrites précédemment.

Une fois le codage entropique terminé, le quatrième module de codage entropique M4 délivre sur sa sortie des données d'images numériques compressées DC.

Le dispositif de compression D peut également comporter un cinquième module M5 chargé de la planification de débit et/ou de l'allocation de débit par sous-bandes et/ou de la planification de qualité, préférentiellement selon le procédé de planification présenté ci-avant. Ce cinquième module M5 est couplé au deuxième module d'estimation M2 qui l'alimente en premier ($\theta_N$, $\alpha_N$ et $\beta_N$) et second ($\theta_O$, $\alpha_O$ et $\beta_O$) jeux de paramètres de prédiction et au troisième module de quantification M3.

L'invention porte également sur un dispositif de décompression (ou décodeur) mettant en oeuvre le procédé de décompression précité. Ce dispositif de décompression ne sera pas décrit ci-après dans la mesure où il est sensiblement constitué des mêmes modules fonctionnels que le dispositif de compression D, mais avec un fonctionnement inversé (le module de codage étant ici alimenté en données d'images numériques compressées et le module de transformation délivrant en sortie des données d'images numériques décompressées définissant l'image initiale).

L'invention porte en outre sur un compresseur/décompresseur, ou codeur/décodeur, ou encore codec, comprenant un dispositif de compression et un dispositif de décompression selon l'invention.

L'invention offre un procédé de codage particulièrement efficace assurant un gain de codage notable grâce à l'exploitation de l'information mutuelle conjointement à la modélisation laplacienne conditionnelle.

Par ailleurs, grâce aux techniques d'estimation des paramètres de prédiction et de détermination des prédictions, particulièrement simples en termes de calcul, les structures des codeur et décodeur sont simplifiées.

En outre, du fait que l'on dispose d'un quantificateur différent pour chacune des sous-bandes, il est donc possible de procéder à une allocation locale.

Enfin, du fait que la règle d'allocation prend explicitement en compte les caractéristiques du dispositif de codage entropique d'ordre 1 selon l'invention, ledit dispositif de compression est beaucoup plus efficace que ceux de l'art antérieur, notamment pour les applications en temps réel à haut débit d'entrée (grandes images), en particulier dans le domaine spatial. Cette efficacité est encore renforcée du fait du faible nombre d'opérations requises par le codage.

L'invention ne se limite pas aux modes de réalisation de procédé de compression, procédé de décompression, dispositif de compression, dispositif de décompression et codec décrits ci-avant, seulement à titre d'exemple, mais elle englobe toutes les variantes que pourra envisager l'homme de l'art dans le cadre des revendications ci-après.

## Revendications

1. Procédé de compression de données d'images numériques par transformée en ondelettes, comprenant une étape de transformation des données d'image numériques en coefficients d'ondelettes répartis dans des sous-bandes, une étape de quantification desdits coefficients d'ondelettes, et une étape de codage entropique desdits coefficients d'ondelettes quantifiés, **caractérisé en ce qu'**il comprend, entre les étapes de transformation et de quantification, une étape d'estimation, pour chaque coefficient de chaque sous-bande de l'image, de premier et second jeux de paramètres de prédiction, associés respectivement à des directions dites « nord-sud » et « ouest-est », en fonction des valeurs des coefficients d'ondelettes de ses voisins nord ou ouest, et **en ce qu'**à l'étape de codage entropique, d'une part, on détermine pour chaque coefficient de chaque sous-bande de l'image une prédiction de l'espérance et de la largeur d'une fonction de type laplacienne, représentative de sa densité de probabilité, en fonction desdits premier et/ou second jeux de paramètres de prédiction et du coefficient d'ondelettes quantifié de son voisin nord ou de son voisin ouest, et d'autre part, on code de façon entropique lesdits coefficients d'ondelettes quantifiés à l'aide desdites espérances et largeurs associées déterminées.

2. Procédé selon la revendication 1, **caractérisé en ce qu'**à l'étape de codage entropique on détermine pour la fonction laplacienne de chaque coefficient d'ondelettes quantifié, lorsque cela est possible, des prédictions d'espérance nord et ouest et des prédictions de largeur nord et ouest, ladite prédiction d'espérance nord, respectivement ouest, étant définie par le produit entre un premier paramètre de prédiction du premier, respectivement second, jeu et la valeur dudit coefficient d'ondelettes quantifié voisin nord, respectivement ouest, et ladite prédiction de largeur nord, respectivement ouest, étant définie par la somme d'un deuxième paramètre de prédiction du premier, respectivement second, jeu et du produit d'un troisième paramètre de prédiction du premier, respectivement second, jeu et de la valeur absolue dudit coefficient d'ondelettes quantifié voisin nord, respectivement ouest.

3. Procédé selon la revendication 2, **caractérisé en ce qu'**à l'étape de codage entropique, d'une première part, en l'absence de coefficient voisin nord on identifie les prédictions d'espérance et de largeur de la fonction laplacienne aux prédictions d'espérance ouest et de largeur ouest, d'une deuxième part, en l'absence de coefficient voisin ouest on identifie les prédictions d'espérance et de largeur de la fonction laplacienne aux prédictions d'espérance nord et de largeur nord, d'une troisième part, en l'absence de coefficients voisins ouest et nord on effectue un codage laplacien fixe, et d'une quatrième part, en présence de coefficients voisins ouest et nord on identifie les prédictions d'espérance et de largeur de la fonction laplacienne respectivement à la demi-somme des prédictions d'espérance nord et ouest et à la demi-somme des prédictions de largeur nord et ouest.

4. Procédé selon l'une des revendications 1 à 3, **caractérisé en ce que** l'on estime les paramètres de prédiction desdits premier et second jeux par régression.

5. Procédé selon la combinaison des revendications 2 et 4, **caractérisé en ce que** l'on estime lesdits premiers paramètres de prédiction des premier et second jeux par une première régression obtenue par résolution d'une première équation $W[n+1,m] = \theta.W[n,m]$ où $W[n,m]$ est la valeur d'un coefficient d'ondelettes et $W[n+1,m]$ est la valeur du coefficient d'ondelettes voisin de $W[n,m]$, et $\theta$ est un premier paramètre de prédiction.

6. Procédé selon la revendication 5, **caractérisé en ce que** l'on résout ladite première équation par la technique des moindres carrés, ledit premier paramètre de prédiction d'un premier ou second jeu étant égal au rapport entre les covariance et variance non normalisées des valeurs des coefficients d'ondelettes, associés au premier ou second jeu.

**7.** Procédé selon la revendications 2 en combinaison avec l'une des revendications 4 à 6, **caractérisé en ce que** l'on estime lesdits deuxième et troisième paramètres de prédiction du premier jeu par une seconde régression obtenue par résolution d'un premier système d'équations $|W[n,m] - \theta_N.W[n,m-1]| = \alpha_N + \beta_N |W[n,m-1]|$, où $W[n,m]$ est la valeur d'un coefficient d'ondelettes, $W_{n,m-1}$ est la valeur du coefficient d'ondelettes voisin nord de $W_{n,m}$, et $\theta_N$, $\alpha_N$ et $\beta_N$ sont respectivement des premier, deuxième et troisième paramètres de prédiction du premier jeu, et **en ce que** l'on estime lesdits deuxième et troisième paramètres de prédiction du second jeu par une seconde régression obtenue par résolution d'un second système d'équations $|W[n,m] - \theta_O.W[n-1,m]| = \alpha_O + \beta_O |W[n-1,m]|$, où $W_{n-1,m}$ est la valeur du coefficient d'ondelettes voisin ouest de $W_{n,m}$, et $\theta_O$, $\alpha_O$ et $\beta_O$ sont respectivement des premier, deuxième et troisième paramètres de prédiction du second jeu.

**8.** Procédé selon la revendication 7, **caractérisé en ce que** l'on résout lesdits premier et second systèmes d'équation par la technique des moindres carrés.

**9.** Procédé selon l'une des revendications 1 à 8, **caractérisé en ce qu'**en présence d'un coefficient d'ondelettes quantifié voisin de valeur nulle, on le substitue par un produit entre le pas de quantification, utilisé lors de l'étape de quantification, et une constante choisie, strictement supérieure à zéro et inférieure ou égale à un (1).

**10.** Procédé selon la revendication 9, **caractérisé en ce que** ladite constante est choisie égale à 1/3.

**11.** Procédé selon l'une des revendications 1 à 10, **caractérisé en ce qu'**à l'étape de codage entropique, après avoir effectué les prédictions desdites espérance et largeur, on procède à la discrétisation de la fonction laplacienne.

**12.** Procédé selon l'une des revendications 1 à 10, **caractérisé en ce qu'**à l'étape de codage entropique, après avoir effectué les prédictions desdites espérance et largeur, on procède audit codage par itération.

**13.** Dispositif (D) de compression de données d'images numériques par transformée en ondelettes, comprenant des moyens de traitement (PM) munis, d'une première part, d'un module (M1) de transformation de données d'image numériques en coefficients d'ondelettes répartis dans des sous-bandes, d'une deuxième part, d'un module (M3) de quantification des coefficients d'ondelettes, et d'une troisième part, d'un module (M4) de codage entropique des coefficients d'ondelettes quantifiés, **caractérisé en ce que** lesdits moyens de traitement (PM) comprennent en outre un module d'estimation (M2) agencé pour estimer pour chaque coefficient de chaque sous-bande de l'image, de premier et second jeux de paramètres de prédiction, associés respectivement à des directions dites « nord-sud » et « ouest-est », en fonction des valeurs des coefficients d'ondelettes de ses voisins nord ou ouest, et **en ce que** ledit module de codage entropique (M4) est agencé, d'une part, pour déterminer pour chaque coefficient de chaque sous-bande de l'image des valeurs de prédiction de l'espérance et de la largeur d'une fonction de type laplacienne, représentative de sa densité de probabilité, en fonction desdits premier et/ou second jeux de paramètres de prédiction et du coefficient d'ondelettes quantifié de son voisin nord ou de son voisin ouest, et d'autre part, de coder de façon entropique lesdits coefficients d'ondelettes quantifiés à l'aide desdites espérances et largeurs associées déterminées.

**14.** Dispositif selon la revendication 13, **caractérisé en ce que** ledit module de codage entropique (M4) est agencé pour déterminer pour la fonction laplacienne de chaque coefficient d'ondelettes quantifié, lorsque cela est possible, des valeurs de prédiction d'espérance nord et ouest et des valeurs de prédiction de largeur nord et ouest, ladite valeur de prédiction d'espérance nord, respectivement ouest, étant définie par le produit entre un premier paramètre de prédiction du premier, respectivement second, jeu et la valeur dudit coefficient d'ondelettes quantifié voisin nord, respectivement ouest, et ladite valeur de prédiction de largeur nord, respectivement ouest, étant définie par la somme d'un deuxième paramètre de prédiction du premier, respectivement second, jeu et du produit d'un troisième paramètre de prédiction du premier, respectivement second, jeu et de la valeur absolue dudit coefficient d'ondelettes quantifié voisin nord, respectivement ouest.

**15.** Dispositif selon la revendication 14, **caractérisé en ce que** ledit module de codage entropique (M4) est agencé, d'une première part, en l'absence de coefficient voisin nord pour identifier les valeurs de prédiction d'espérance et de largeur de la fonction laplacienne aux valeurs de prédiction d'espérance ouest et de largeur ouest, d'une deuxième part, en l'absence de coefficient voisin ouest pour identifier les valeurs de prédiction d'espérance et de largeur de la fonction laplacienne aux valeurs de prédiction d'espérance nord et de largeur nord, d'une troisième part, en l'absence de coefficients voisins ouest et nord pour effectuer un codage laplacien fixe, et d'une quatrième part, en présence de coefficients voisins ouest et nord pour identifier les valeurs de prédiction d'espérance et de largeur de la fonction laplacienne respectivement à la demi-somme des valeurs de prédiction d'espérance nord et ouest et à la demi-somme des valeurs de prédiction de largeur nord et ouest.

**16.** Dispositif selon l'une des revendications 13 à 15, **caractérisé en ce que** ledit module d'estimation (M2) est agencé pour estimer les paramètres de prédiction desdits premier et second jeux par régression.

**17.** Dispositif selon la combinaison des revendications 14 et 16, **caractérisé en ce que** ledit module d'estimation (M2) est agencé pour estimer lesdits premiers paramètres de prédiction des premier et second jeux par une première régression obtenue par résolution d'une première équation $W[n+1,m] = \theta.W[n,m]$ où $W[n,m]$ est la valeur d'un coefficient d'ondelettes et $W[n+1,m]$ est la valeur du coefficient d'ondelettes voisin de $W[n,m]$, et $\theta$ est un premier paramètre de prédiction.

**18.** Dispositif selon la revendication 17, **caractérisé en ce que** ledit module d'estimation (M2) est agencé pour résoudre ladite première équation par la technique des moindres carrés, ledit premier paramètre de prédiction d'un premier ou second jeu étant égal au rapport entre les covariance et variance non normalisées des valeurs des coefficients d'ondelettes, associés au premier ou second jeu.

**19.** Dispositif selon la revendications 14 en combinaison avec l'une des revendications 16 à 18, **caractérisé en ce que** ledit module d'estimation (M2) est agencé, d'une part, pour estimer lesdits deuxième et troisième paramètres de prédiction du premier jeu par une seconde régression obtenue par résolution d'un premier système d'équations $|W[n,m] - \theta_N.W[n,m-1]| = \alpha_N + \beta_N |W[n,m-1]|$, où $W[n,m]$ est la valeur d'un coefficient d'ondelettes, $W_{n,m-1}$ est la valeur du coefficient d'ondelettes voisin nord de $W_{n,m}$, et $\theta_N$, $\alpha_N$ et $\beta_N$ sont respectivement des premier, deuxième et troisième paramètres de prédiction du premier jeu, et d'autre part, pour estimer lesdits deuxième et troisième paramètres de prédiction du second jeu par une seconde régression obtenue par résolution d'un second système d'équations $|W[n,m] - \theta_O.W[n-1,m]| = \alpha_O + \beta_O |W[n-1,m]|$, où $W_{n-1,m}$ est la valeur du coefficient d'ondelettes voisin ouest de $W_{n,m}$, et $\theta_O$, $\alpha_O$ et $\beta_O$ sont respectivement des premier, deuxième et troisième paramètres de prédiction du second jeu.

**20.** Dispositif selon la revendication 19, **caractérisé en ce que** ledit module d'estimation (M2) est agencé pour résoudre lesdits premier et second systèmes d'équation par la technique des moindres carrés.

**21.** Dispositif selon l'une des revendications 13 à 20, **caractérisé en ce que** ledit module de codage entropique (M4) est agencé, en présence d'un coefficient d'ondelettes quantifié voisin de valeur nulle, pour le substituer par le résultat d'un produit entre le pas de quantification, utilisé par le module de quantification, et une constante choisie, strictement supérieure à zéro et inférieure ou égale à 1.

**22.** Dispositif selon la revendication 21, **caractérisé en ce que** ladite constante est choisie égale à 1/3.

**23.** Dispositif selon l'une des revendications 13 à 22, **caractérisé en ce que** ledit module de codage entropique (M4) est agencé pour procéder à une discrétisation de la fonction laplacienne après avoir effectué les prédictions desdites espérance et largeur.

**24.** Dispositif selon l'une des revendications 13 à 22, **caractérisé en ce que** ledit module de codage entropique (M4) est agencé pour procéder audit codage par itération après avoir effectué les prédictions desdites espérance et largeur.

**25.** Codec de données d'image numériques, **caractérisé en ce qu'**il comprend un dispositif de compression (D) selon l'une des revendications 13 à 24.

**26.** Procédé selon la revendication 1, **caractérisé en ce qu'**il permet une régulation de débit en temps réel par la mise en oeuvre d'un algorithme de planification de débit dit "avec allocation de débit" consistant à laisser un module de planification, d'une part, choisir indépendamment les pas de quantification, utilisés lors de la quantification, des différentes sous-bandes de sorte que le débit total soit égal à une consigne de débit, et d'autre part, choisir la façon dont ce débit doit être réparti dans les différentes sous-bandes.

**27.** Procédé selon la revendication 1, **caractérisé en ce qu'**il permet une régulation de débit en temps réel par la mise en oeuvre d'un algorithme de planification de débit dit "avec allocation de débit pure" consistant à lier les pas de quantification des différentes sous-bandes, en général identiques, un module de planification se contentant de choisir le pas de quantification unique pour toutes les sous-bandes qui permettra d'atteindre une consigne de débit fixée.

FIG_1

FIG_2